Europäisches Patentamt

European Patent Office

Office européen des brevets

(19)

(11) Veröffentlichungsnummer: **0 212 333**
**B1**

(12) # EUROPÄISCHE PATENTSCHRIFT

(45) Veröffentlichungstag der Patentschrift:
21.03.90

(51) Int. Cl.⁴: **B60B 21/10**, B60C 15/02

(21) Anmeldenummer: 86110262.2

(22) Anmeldetag: 25.07.86

(54) **Fahrzeugrad.**

(30) Priorität: 17.08.85 DE 3529512

(43) Veröffentlichungstag der Anmeldung:
04.03.87 Patentblatt 87/10

(45) Bekanntmachung des Hinweises auf die Patenterteilung:
21.03.90 Patentblatt 90/12

(84) Benannte Vertragsstaaten:
AT BE CH DE FR GB IT LI LU NL SE

(56) Entgegenhaltungen:
EP-A- 0 152 567
DE-A- 3 312 482
DE-C- 63 785
GB-A- 282 963
US-A- 1 885 484
US-A- 1 903 575
US-A- 4 169 496

(73) Patentinhaber: **Continental Aktiengesellschaft, Königsworther Platz 1, D-3000 Hannover 1(DE)**

(72) Erfinder: **Frerichs, Udo, Buchenweg 7, D-3012 Langenhagen 8(DE)**
Erfinder: **Rach, Heinz-Dieter, Planetenring 32, D-3008 Garbsen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein luftbereiftes Fahrzeugrad mit einer starren Felge und mit einem Fahrzeugluftreifen aus Gummi oder gummiähnlichen Kunststoffen, der eine Karkasse aufweist, die in den Reifenwülsten durch Umschlingen von zug- und druckfesten Wulstkernen verankert ist, bei dem die Felge sich im wesentlichen radial nach innen erstreckende Felgenhörner und auf der radial inneren Seite des Felgenkranzes je einen Einbauraum mit einem Montagehochbett aufweist, der von senkrechten und/oder schrägen Wänden der Felge begrenzt wird, bei dem der Reifenwulst eine Querschnittsform aufweist, die einerseits bei der Montage ein Eintauchen des Reifenwulstes in dem Einbauraum mit dem Montagehochbett erlaubt, andererseits in der Betriebsstellung des Reifens den Einbauraum mit dem Hochbettbereich verschließt, wobei ein Teil es Reifenwulstes axial innen an einem dem Felgenhorn abgewandten Teil der Felge anschlägt.

Ein solches gattungsgemäßes Fahrzeugrad wird in der älteren Patentanmeldung EP-A 0 152 567 beschrieben. Dieses gemäß Art. 54 (3) EPÜ bekannte Fahrzeugrad, wie auch das in der DE-OS 30 00 428 offenbarte,ist besonders gut für einen sogenannten Pannenlauf geeignet, weil sich bei einem Druckverlust der Reifen auf verhältnismäßig großen Stützflächen des Felgenkranzes abstützen und weil er nach seitlich außen ausbiegen kann, so daß beim Pannenlauf keine Knickstellen entstehen.

Bei den bekannten Fahrzeugrädern sind jedoch häufig die Stützflächen noch nicht optimal ausgebildet, weil sich zwischen den Teilen des Felgenkranzes, die der Reifensitzfläche gegenüberliegen, und denen, die dem Montagehochbett gegenüberliegen, eine Stufung befindet. Weiterhin benötigt das aus der Patentanmeldung P 34 05 363.8 bekannte Fahrzeugrad einen relativ großen Einbauraum, damit der Reifen montiert werden kann. Schließlich wird es als nachteilig empfunden, daß bei den bekannten Fahrzeugrädern ein sehr großer Bereich der Reifeninnenwände metallisch abzuformen ist, um einen luftdichten Sitz an der Felge zu erreichen.

Der Erfindung liegt deshalb die Aufgabe zugrunde, ein Fahrzeugrad anzugeben, bei dem unter Beibehaltung der Vorteile des bekannten Fahrzeugrads die aufgezeigten Nachteile nicht mehr auftreten.

Diese Aufgabe wird erfindungsgemäß dadurch gelöst, daß das Montagehochbett bis unmittelbar an das Felgenhorn heranreicht und daß in der Betriebsstellung des Reifens der Reifenwulst mit radialem Abstand zu dem Teil des Montagehochbetts angeordnet ist, der dem Felgenhorn benachbart ist.

Durch die Erfindung wird der Vorteil einer geringeren Bauhöhe für den Reifenwulst erzielt. Dies wiederum hat mehrere weitere Vorteile zur Folge. Zum einen kann die Breite der Einführöffnung des Einbauraumes für den Reifenwulst wie auch der gesamte Einbau kleiner ausgebildet werden. Durch den Abstand zwischen dem radial äußeren Rand des Reifenwulstes und dem Felgenkranz erzielt man eine Entkoppelung von Reifensitz und Felgenstützfläche, so daß man freie Gestaltungsmöglichkeiten für die Stützflächen erhält, insbesondere kann man den Felgenkranz über die gesamte Breite des Einbauraumes auf der radial äußeren Seite als nahezu waagerechte Stützfläche ausbilden.

Es sind zwar bereits ältere Fahrzeugräder bekannt, bei denen ein Reifenwulst mit Abstand zum Felgenkranz montiert wird, doch besteht bei ihnen die Gefahr, daß beim Einleiten von seitlichen Kräften in die Karkasse - z.B. durch das schräge Heranfahren an Bordsteine - der Wulst von seinem Sitz am Felgenhorn abhebt. Erst durch die weitere erfindungsgemäße Maßnahme, den Reifenwulst an einem axial inneren Teil der Felge anschlagen zu lassen, erzielt man einen zuverlässigen und in allen Betriebssituationen sicheren Felgensitz.

Mit der Erfindung wird weiterhin der Vorteil erzielt, daß ein gegen über den bekannten Fahrzeugrädern kleinerer Bereich der Reifeninnenwand metallisch abzuformen ist, um einen luftdichten Sitz zu erreichen. Dies wiederum hat einfachere Herstellungsverfahren für den Reifen und einfacher aufgebaute Vulkanisiervorrichtungen zur Folge. Schließlich ist als Vorteil eine erheblich vereinfachte Reifendemontage zu nennen, weil der Reifenwulst bei drucklosem Reifen örtlich nach radial außen gedrückt werden kann, so daß man ein Demontage-Werkzeug auf einfache Weise in den Einbauraum einbringen kann.

Vorteilhafte Ausgestaltungen der Erfindung sind den Unteransprüchen zu entnehmen.

Nachfolgend wird ein Ausführungsbeispiel der Erfindung anhand einer Zeichnung erläutert.

Es zeigt

Fig. 1 ein Fahrzeugrad mit einer einteiligen Felge und einem am Felgenhorn eingehängten Reifen in einem Radialteilschnitt,

Fig. 2 einen vergrößerten Ausschnitt des Fahrzeugrads gemäß Fig. 1 im Bereich des Einbauraumes für einen Reifenwulst.

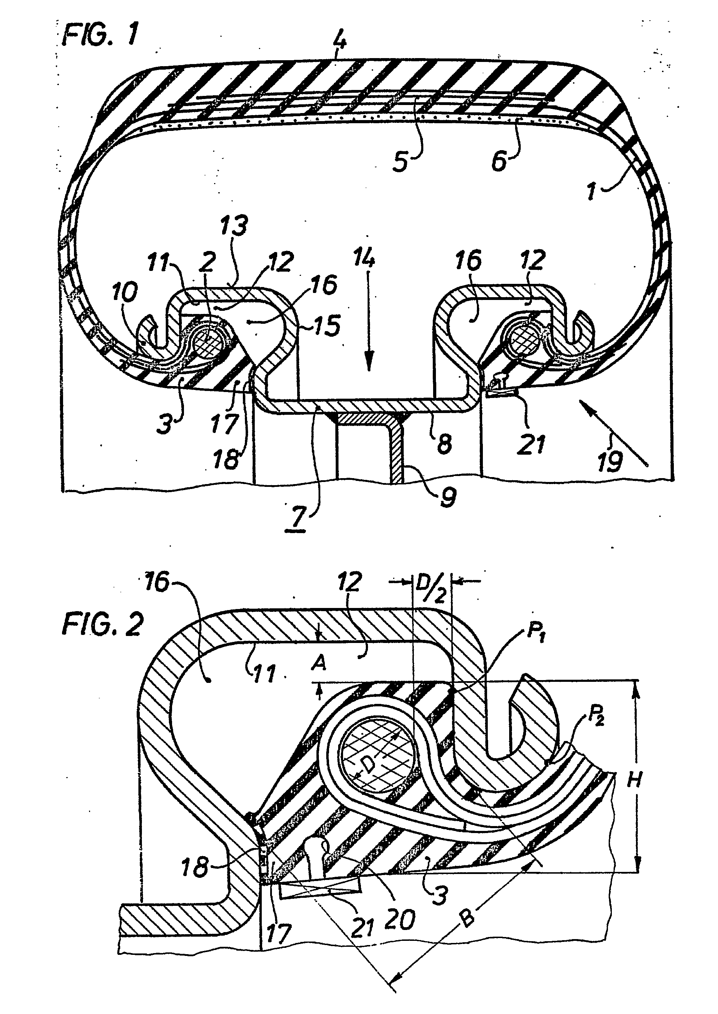

In den Fig. 1 und 2 ist ein Fahrzeugrad im montierten Zustand dargestellt. Der verwendete Fahrzeugluftreifen, der im wesentlichen aus Gummi oder gummiähnlichen Stoffen besteht, weist eine Radialkarkasse 1 auf - gegebenenfalls kann es auch eine Winkelkarkasse sein -, die mit ihren Enden durch Umschlingen von zug- und druckfesten Wulstkernen 2 in den Wülsten 3 verankert ist. Unterhalb vom Laufstreifen 4 zwischen diesem und der Karkasse 1 befindet sich ein in Umfangsrichtung zugfester, aus zwei oder mehreren Cordgewebelagen bestehender Gürtel 5, der die Seitenstabilisierung des Reifenkörpers bewirkt. Der Reifen weist zudem an seiner Innenfläche etwa in dem Bereich des Laufstreifens 4 eine dünne Gleitschicht 6 auf, die ein reibungsarmes Abstützen auf der Felge 7 im Falle einer Panne ermöglicht.

Der bevorzugt aus Metall bestehende Felgenkranz 8 einer einteiligen Felge 7 ist an einer Felgenschüssel 9 angeschweißt und endet im Querschnitt gesehen seitlich außen in einem im wesentlichen sich nach radial innen erstreckenden Felgenhorn 10. Neben den Felgenhörnern 10 schließen sich nach axial innen hin Montagehochbetten 12 für die Reifenwülste 3 an, so daß die Reifenwülste 3 in einem Abstand A zu diesem Teil 11 des Felgenkranzes 8 angeordnet sind. Auf der Höhe der Montagehochbetten 12 sind die radial äußeren Teile des Felgenkranzes 8 zu im wesentlichen waagerechten Stützflächen 13 für den Reifen ausgebildet. In der Mitte des Felgenkranzes 8 befindet sich ein nach radial außen offenes Tiefbett 14, das sich nach radial innen hin aufweitet, so daß die das Tiefbett 14 begrenzenden Seitenwände 15 des Felgenkranzes 8 zunächst vertikal und dann schräg nach seitlich außen verlaufen.

Durch die beschriebene Form des Felgenkranzes 8 wird ein dreiseitig geschlossener Einbauraum 16 für den Reifenwulst 3 gebildet, während die vierte Seite nach der Reifenmontage durch den Reifenwulst 3 selbst verschlossen wird. Dazu weist der Reifenwulst 3 in seinem radial und axial inneren Bereich eine umlaufende Verdickung 17 auf.

Der Abstand A zwischen dem radial äußeren Rand des Reifenwulstes und dem benachbarten Teil 11 des Felgenkranzes 8, der die Höhe des Montagehochbettes 12 festlegt, ist im wesentlichen ebenso groß wie die Höhe bereits bekannter Montagehochbetten.

Die Höhe H des Reifenwulstes 3 bestimmt die Breite B der Einführöffnung in den Einbauraum 16 in der Weise, daß sie gemäß der Beziehung B ≧ H zu wählen ist. Damit der Reifenwulst 3 in dem Bereich seiner Verdickung 17, der axial innen am Felgenkranz anliegt, auf Dauer vor Schädigungen durch Anscheuern geschützt wird, kann er dort eine zusätzliche Gewebeverstärkung 18 aufweisen.

Um einen luftdichten Sitz des Reifens an der Felge zu gewährleisten, ist die Reifeninnenwand in dem am Felgenhorn 10 anliegenden Bereich zwischen P1 und P2 metallisch abgeformt. Gegenüber den bekannten Fahrzeugrädern ist dieser Bereich erheblich reduziert, und für den Reifensitz gibt es nur noch eine Kompressionsstelle, weil der Wulst 3 nicht mehr am Teil 11 des Felgenkranzes 8 anliegt.

Der Wulstsitz sollte derart gewählt werden, daß der Wulstkern 2 mit seinem Querschnitt zumindest zur Hälfte, bevorzugt jedoch ganz in den Raum neben dem Felgenhorn 10 eintaucht. Gemäß einer bevorzugten Ausführungsform ist der Wulstkern 2 in einem solchen Abstand vom Felgenhorn 10 angeordnet, der etwa dem halben Querschnittsdurchmesser D/2 entspricht. Damit im Bereich des Reifensitzes keine zu großen Kompressionen auftreten, sollte der Krümmungsradius des Felgenhornes 10 an der radial inneren Berührungsfläche mit dem Reifen größer sein als der des Wulstkernquerschnittes.

Zur Montage des Reifens wird die Felge 7 zunächst im wesentlichen senkrecht zum Reifen auf diesen zubewegt, bis sie mit ihrem größten Durchmesser im Innenraum des Reifens liegt. Nach einer Drehung von ca. 90° verlaufen die Rotationsachsen von Reifen und Felge 7 parallel, und die Reifenwülste 3 befinden sich seitlich außen neben den zugehörigen Felgenhörnern 10.

Zunächst wird der eine Reifenwulst 3 - gegebenenfalls unter geringfügiger Schwenkung um den Wulstkern 2 - in Richtung des Pfeils 9 (Fig. 1) in den Einbauraum 16 eingeführt.

Das Montagehochbett 12 ist derart bemessen, daß der Reifenwulst 3 bei vollständiger Einführung auf der gegenüberliegenden Seite über das Felgenhorn 10 gehoben werden kann.

Nachdem sich beide Reifenwülste 3 mit ihrem gesamten Umfang in dem jeweiligen Einbauraum 16 mit dem Hochbett 12 befinden, wird der Reifen mit Luft beaufschlagt. Dabei werden die Reifenwülste 3 unter gleichzeitiger Rückschwenkung um die Wulstkerne 2 auf die Sitzflächen an den Felgenhörnern 10 gezogen, und es erfolgt automatisch eine Verschließung des Einbauraums 16 durch die Verdickungen 17. Für eine Demontage des Reifens wird der Reifen zunächst drucklos gemacht. Danach läßt sich der Reifenwulst 3 an einer Stelle nach radial außen in das Montagehochbett 12 drücken, wobei zugleich die Verdickung 17 verschwenkt und in den Einbauraum 16 eingetaucht wird. Anschließend ist es ohne weiteres möglich, ein Demontage-Werkzeug in den Einbauraum 16 einzubringen, mit dem der Reifen auf einfache und bekannte Weise demontiert werden kann.

Damit das vorstehend beschriebene Fahrzeugrad auf eine möglichst einfache Art ausgewuchtet werden kann, befinden sich im radial inneren Bereich des Reifenwulstes 3 Ausnehmungen 20, die in Umfangsrichtung mit Abstand zueinander angeordnet sind und in denen Ausgleichsgewichte 21 befestigt sind.

**Patentansprüche**

1. Luftbereiftes Fahrzeugrad mit einer starren Felge (7) und mit einem Fahrzeugluftreifen aus Gummi oder gummiählichen Kunststoffen, der eine Karkasse (1) aufweist, die in den Reifenwülsten (3) durch Umschlingen von zug- und druckfesten Wulstkernen (2) verankert ist, bei dem die Felge (7) sich im wesentlichen radial nach innen erstreckende Felgenhörner (10) und auf der radial inneren Seite des Felgenkranzes (8) je einen Einbauraum (16) mit einem Montagehochbett (12) aufweist, der von senkrechten und/oder schrägen Wänden (15) der Felge begrenzt wird, bei dem der Reifenwulst (3) eine Querschnittsform aufweist, die einerseits bei der Montage ein Eintauchen des Reifenwulstes in den Einbauraum (16) mit dem Montagehochbett erlaubt, andererseits in der Betriebsstellung des Reifens den Einbauraum mit dem Hochbettbereich verschließt, wobei ein Teil (17) des Reifenwulstes (3) axial innen an einem dem Felgenhorn abgewandten Teil (15) der Felge (7) anschlägt dadurch gekennzeichnet, daß das Montagehochbett (12) bis unmittelbar an das Felgenhorn (10) heranreicht und daß in der Betriebsstellung des Reifens der Reifenwulst (3) mit radialem Abstand (A) zu dem Teil (11) des Montagehochbetts (12) angeordnet ist, der dem Felgenhorn (10) benachbart ist.

2. Fahrzeugrad nach Anspruch 1, dadurch gekennzeichnet, daß der Abstand (A) etwa der Höhe eines sonst üblichen Montagehochbetts (12) entspricht.

3. Fahrzeugrad nach Anspruch 1, dadurch gekennzeichnet, daß die Breite (B) der Einführöffnung in den Einbauraum (16) gleich oder größer ist als die Höhe (H) des Reifenwulstes (3).

4. Fahrzeugrad nach Anspruch 1, dadurch gekennzeichnet, daß der Felgenkranz (8) über die gesamte Breite des Einbauraumes (16) auf der radial äußeren Seite eine im wesentlichen waagerechte Stützfläche (13) bildet.

5. Fahrzeugrad nach Anspruch 1, dadurch gekennzeichnet, daß der Krümmungsradius des Felgenhornes (10) an der radial inneren Berührungsfläche mit dem Reifen größer ist als der des Wulstkernquerschnitts.

6. Fahrzeugrad nach Anspruch 1, dadurch gekennzeichnet, daß der am Felgenhorn (10) anliegende Bereich (P1 bis P2) der Reifeninnenwand metallisch abgeformt ist.

7. Fahrzeugrad nach Anspruch 1, dadurch gekennzeichnet, daß der Wulstkern (2) mit seinem Querschnitt zumindest halb, bevorzugt jedoch ganz in den Raum neben dem Felgenhorn (10) eintaucht.

8. Fahrzeugrad nach Anspruch 1, dadurch gekennzeichnet, daß der Wulstkern (2) einen Abstand vom Felgenhorn (10) aufweist, der etwa dem halben Querschnittsdurchmesser (D/2) entspricht.

9. Fahrzeugrad nach Anspruch 1, dadurch gekennzeichnet, daß der Wulst (3) im Anschlagbereich der Verdickung (17) eine Gewebeverstärkung (18) aufweist.

10. Fahrzeugrad nach Anspruch 1, gekennzeichnet durch Ausnehmungen (20) an der radial inneren Seite des Reifenwulstes (3), in denen Ausgleichsgewichte (21) befestigt sind.

## Claims

1. Vehicle wheel, which is fitted with a pneumatic tyre, having a rigid rim (7) and a pneumatic vehicle tyre, which is formed from rubber or rubber-like plastics materials and includes a carcase (1) which is secured in the tyre beads (3) by being looped around substantially inextensible and pressure-resistant bead cores (2), wherein the rim (7) includes rim flanges (10), which extend substantially radially inwardly, and an installation chamber (16) on each radially inner surface of the rim ring (8), which chamber is provided with an assembly high bed (12) which is defined by vertical and/or inclined walls (15) of the rim, wherein the tyre bead (3) has a cross-sectional configuration which, on the one hand, during assembly permits the tyre bead to extend into the installation chamber (16), which is provided with the assembly high bed and, on the other hand, in the operational position of the tyre, seals the installation chamber with the high bed region, one portion (17) of the tyre bead (3) abutting axially internally against a portion (15) of the rim (7) remote from the rim flange, characterised in that the assembly high bed (12) extends directly to the rim flange (10), and in that, in the operational position of the tyre, the tyre bead (3) is disposed at a radial spacing (A) from the portion (11) of the assembly high bed (12) which is situated adjacent to the rim flange (10).

2. Vehicle wheel according to claim 1, characterised in that the spacing (A) corresponds approximately to the height of an otherwise conventional assembly high bed (12).

3. Vehicle wheel according to claim 1, characterised in that the width (B) of the inlet aperture leading into the installation chamber (16) is equal to, or greater than, the height (H) of the tyre bead (3).

4. Vehicle wheel according to claim 1, characterised in that the rim ring (8) forms a substantially horizontal supporting surface (13) over the entire width of the installation chamber (16) on the radially outer surface.

5. Vehicle wheel according to claim 1, characterised in that the radius of curvature of the rim flange (10) at the radially inner surface of contact with the tyre is greater than that of the cross-section of the bead core.

6. Vehicle wheel according to claim 1, characterised in that the section (P1 to P2) of the internal wall of the tyre situated adjacent to the rim flange (10) is formed from metal.

7. Vehicle wheel according to claim 1, characterised in that at least half, but preferably all, of the cross-section of the bead core (2) extends into the chamber adjacent to the rim flange (10).

8. Vehicle wheel according to claim 1, characterised in that the bead core (2) has a spacing from the rim flange (10) which corresponds approximately to half the cross-sectional diameter (D/2).

9. Vehicle wheel according to claim 1, characterised in that the bead (3) in the abutment region of the thickened portion (17) has a fabric reinforcement (18).

10. Vehicle wheel according to claim 1, characterised by recesses (20) in the radially inner surface of the tyre bead (3), in which recesses compensating weights (21) are mounted.

## Revendications

1 - Roue de véhicule à pneumatique, comportant une jante rigide (7, et un pneumatique en caoutchouc ou en matières plastiques analogues au caoutchouc, qui comporte une carcasse (1) qui est accrochée dans les talons (3) du pneumatique par enroulement autour de tringles, 2) de talon résistantes à la traction et à la compression, roue dans laquelle la jante (7) comporte des rebords (10) s'étendant sensiblement radialement vers l'intérieur et, sur le côté radialement intérieur de la couronne (8) de jante, respectivement un volume récepteur (16) pourvu d'une moulure de montage (12) qui est délimitée par des parois (15) verticales et/ou inclinées de la jante, le talon (3) du pneumatique ayant une forme de section droite qui permet d'une part, lors du montage, une pénétration du talon du pneumatique dans le volume (16) récepteur pourvu de la moulure de montage et qui d'autre part, dans la position de service du pneumatique, obture le volume récepteur avec la moulure de montage, une partie (17) du talon de pneumatique (3) venant buter axialement contre une partie (15) de la jante qui est opposée au rebord de la jante (7), caractérisée en ce que la moulure de montage (12) s'étend directement jusqu'au rebord de jante (10) et en ce que, dans la position de service du pneumatique, le talon (3) du pneumatique est disposé à une distance radiale (A) de la partie (11) de la moulure de jante (12) qui est adjacente au rebord (10) de la jante.

2 - Roue de véhicule selon la revendication 1, caractérisée en ce que la distance d'espacement (A) correspond à peu près à la hauteur d'une moulure de montage (12) autrement classique.

3 - Roue de véhicule selon la revendication 1, caractérisée en ce que la largeur (B) de l'ouverture d'entrée dans le volume récepteur (16) est égale ou supérieure à la hauteur (H) du talon (3) du pneumatique.

4 - Roue de véhicule selon la revendication 1, caractérisée en ce que la couronne (8) de la jante crée, sur toute la largeur du volume récepteur (16) et sur le côté radialement extérieur, une surface d'appui (13) sensiblement horizontale.

5 - Roue de véhicule selon la revendication 1, caractérisée en ce que le rayon de courbure du rebord (10) de la jante sur la surface radialement intérieure de contact avec le pneumatique est supérieur à celui de la section de la tringle de talon.

6 - Roue de véhicule selon la revendication 1, caractérisée en ce que la zone (P1 à P2) de la paroi intérieure de pneumatique s'appliquant contre le rebord (10) de la jante est formée d'un métal.

7 - Roue de véhicule selon la revendication 1, caractérisée en ce que la tringle de talon (2) pénètre par sa section au moins de moitié mais de préférence cependant en totalité dans le volume situé à côté du rebord (10) de la jante.

8 - Roue de véhicule selon la revendication 1, caractérisée en ce que la tringle de talon (2) est espacée du rebord (10) de la jante d'une distance correspondant à peu près à la moitié du diamètre de section (D/2).

9 - Roue de véhicule selon la revendication 1, caractérisée en ce que le talon (3) comporte, dans une zone de butée de la surépaisseur (17), un renforcement en tissu (18).

10 - Roue de véhicule selon la revendication 1, caractérisée par des évidements (20) prévus sur le côté radialement intérieur du talon (3) du pneumatique et dans lesquels sont fixées des masselottes d'équilibrage (21).

FIG. 1

FIG. 2